(19) **Europäisches Patentamt**

**European Patent Office**

**Office européen des brevets**

(11) **EP 1 058 449 B1**

(12) **EUROPEAN PATENT SPECIFICATION**

(45) Date of publication and mention
of the grant of the patent:
**02.11.2005 Bulletin 2005/44**

(51) Int Cl.⁷: **H04N 5/14**

(21) Application number: **00304566.3**

(22) Date of filing: **30.05.2000**

(54) **Image processing apparatus, method thereof and image motion detection device**

Verfahren und Vorrichtung zur Verarbeitung von Bildern und Vorrichtung zur Detektion der Bildbewegung

Procédé et dispositif de traitement d'images et dispositif de détection de mouvement

(84) Designated Contracting States:
**DE FR GB IT NL**

(30) Priority: **01.06.1999 JP 15379699**

(43) Date of publication of application:
**06.12.2000 Bulletin 2000/49**

(73) Proprietor: **SONY CORPORATION
Tokyo 141 (JP)**

(72) Inventors:
  • **Miyata, Katsunari
  Shinagawa-ku, Tokyo 141 (JP)**
  • **Ohta, Masashi
  Shinagawa-ku, Tokyo 141 (JP)**
  • **Hamada, Toshimichi
  Shinagawa-ku, Tokyo 141 (JP)**

(74) Representative: **Horner, David Richard et al
D Young & Co
120 Holborn
London EC1N 2DY (GB)**

(56) References cited:
**EP-A- 0 605 165        EP-A- 0 830 018
US-A- 4 626 891        US-A- 4 972 259
US-A- 5 475 438        US-A- 5 917 554**

**Description**

BACKGROUND OF THE INVENTION

Field of the Invention

This invention relates to an image processing apparatus, method thereof and medium and relates in particular to an image processing apparatus, method thereof and medium for performing motion detection.

Description of the Related Art

In the related art, a method using the difference between fields, and a method using the difference between frames are generally used for detecting motion from image data that was input, since these methods can be implemented in a simple circuit structure.

A vertical deviation or offset equivalent to one line is present between two successive fields when only the field differential is used during input of interlaced image data. In order to therefore calculate this differential, the pixels positioned between adjacent lines of one of the fields are calculated by interpolation and offset (compensation) performed, and the differential with the other field then calculated. In calculating the field differential value by using pixel data interpolated from one of the fields in this way, the image becomes blurred due to the interpolation, causing the problem of a drop in the motion detection accuracy.

When the frame differential method is used in motion detection, a two field interval is present between the images whose differential is being detected. Therefore, even in cases where the frame differential between two images are a match, the image between those two images will not always also be a match and may cause omissions to occur during calculation of motion detection.

Faulty detection often tends to occur particularly at the horizontal portion of the edge. The edge has a high difference in contrast so that just a slight vibration in the target object or a slight jitter due to the motion detection circuit causes large effects, and even images that should be determined to be stationary, may appear to change with dizzy rapidity due to motion detection.

EP 0 830 018 A2 discloses a method and system for motion detection in a video image which uses both field-difference and frame-difference motion values. The lesser of two frame-difference motion vectors and the lesser of two field-difference motion vectors are input into a logical mixer and used to determine a motion vector to be assigned to a pixel.

US 5,475,438 relates to a pixel interpolation system. An interfield pixel value is determined by averaging a pixel in a line above and the line below the desired pixel. A motion value is determined by averaging the pixels in the line above and the line below the desired pixel in the corresponding field one frame before and one frame after the desired pixel, subtracting the interfield pixel value therefrom and comparing these values with a difference of the pixels at the same location one field earlier and one field later. This enables a motion value to be determined.

US5917554 discloses the improvement of the quality of still images or of enlarged motion images extracted from interlaced video frames. Motion is detected by comparing a field difference value to a threshold. The threshold is set based on the strength of vertical edges. Edge are automatically detected and the strength of edges is used to control the motion detection sensitivity.

SUMMARY OF THE INVENTION

In view of the above problems with the related art, embodiments of the invention seek to improve motion detection accuracy by utilizing the field differential information, frame differential information as well as horizontal edge information and information characteristic of the image.

According to one aspect of the present invention, there is provided an image processing apparatus as set out in claim 1.

Preferably, the frame differential calculation means is capable of calculating the frame differential value for the target pixels positioned on at least one of the lines from among the lines positioned above and below the target pixels, and the detection means is capable of calculating the moving region of the image based on the image signal by utilizing two or more frame differential values and field differential values calculated with the frame differential calculation means.

According to another aspect of the present invention, there is provided an image processing method as set out in claim 3.

According to another aspect of the present invention, there is provided a computer program product as set out in claim 5.

**EP 1 058 449 B1**

Embodiments of the present invention calculate the field differential value and frame differential value from the image signal, and detect the image of the moving region based on an image signal utilizing the calculated field and frame differential values, thus rendering the effect of improved motion detection accuracy.

Further particular and preferred aspects of the present invention are set out in the accompanying independent and dependent claims.

BRIEF DESCRIPTION OF THE DRAWINGS

The present invention will be described further, by way of example only, with reference to preferred embodiments thereof as illustrated in the accompanying drawings, in which:

Fig. 1 is a block diagram showing the structure of the embodiment of the record/reproduction device of the embodiment of this invention.
Fig. 2 is block diagram showing the motion detection circuit 26 of Fig. 1.
Fig. 3 is a block diagram showing internal structure of the moving region discriminator 63 of Fig. 2.
Fig. 4 is a flowchart illustrating the operation of the motion detector circuit 26.
Fig. 5 is a drawing illustrating the relation of the field and pixels.
Fig. 6 is a drawing illustrating the positional relation of each pixel shown over time.
Fig. 7 is a drawing showing the field differential.
Fig. 8 is a drawing showing the frame differential.
Fig. 9 is a drawing showing the line differential.
Fig. 10 is a flowchart illustrating step S4 of Fig. 4 in more detail.
Fig. 11 is a flowchart illustrating step S11 of Fig. 10 in more detail.
Fig. 12 is a flowchart illustrating step S12 of Fig. 10 in more detail.
Fig. 13 is a drawing illustrating the process when a scene change is present.
Fig. 14 is a drawing illustrating the process when a scene change is present.
Fig. 15 is a drawing illustrating the process when a scene change is present.
Fig. 16 is drawing illustrating the process for isolation region elimination.
Fig. 17 is a drawing illustrating the frame static image creation process.
Figs. 18A to 18C are drawings illustrating the processing in steps S5 through S7.
Fig. 19 is a drawing for the frame differential.
Figs. 20A to 20C are drawings showing the media.

DETAILED DESCRIPTION OF THE PREFERRED EMBODIMENTS

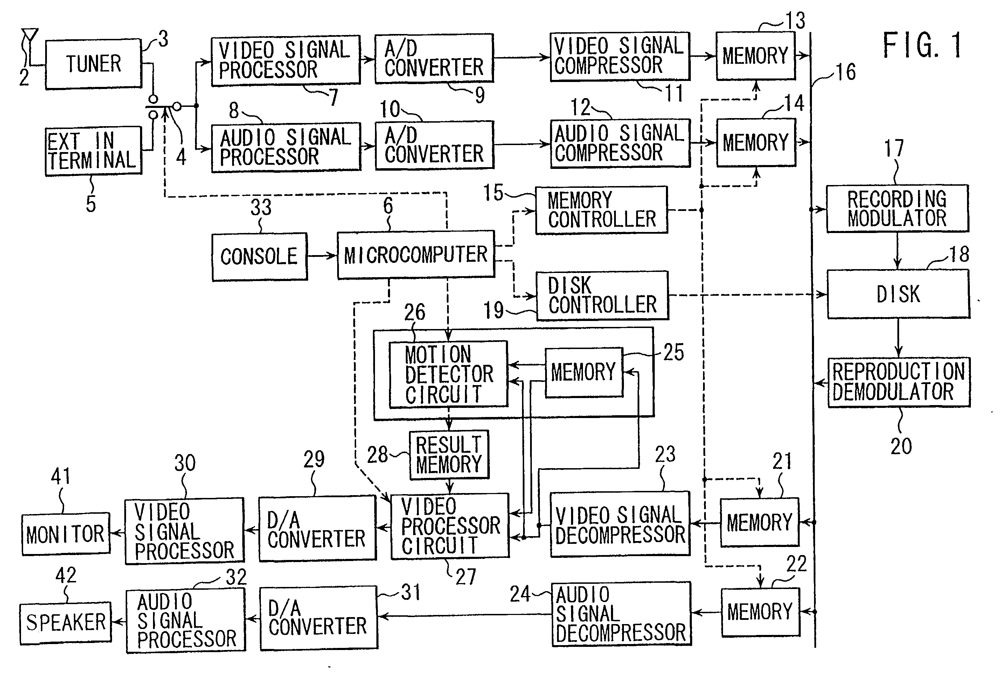

Fig. 1 is a block diagram showing the structure of the embodiment of a record/reproduction device 1. A broadcast program received by an antenna 2 is output to a tuner 3, the signal only of the program desired by the user is selected, and output to a switch 4. Data from a device (not shown in the drawing) connected to an external input terminal 5 is also input to the switch 4. The switch 4 selects either the output from the tuner 3 or the external input terminal 5 according to a command from the microcomputer 6, and respectively sends an audio signal to a audio signal processor 8 and a video signal to a video processor 7.

The video signal processor 7 performs processing such as AGC (automatic gain control) processing of the video signal that was input and outputs it to the A/D (Analog/Digital) converter 9. The audio signal processor 8, in the same way, performs specified processing of the audio signal that was input and outputs it to the A/D converter 10. The A/D (Analog/Digital) converter 9 converts the video signals into digital signals and the A/D converter 10 converts the audio signals into digital signals. The video signal converted into a digital signal by the A/D converter 9 is output to a video signal compressor 11, and the audio signal converted to a digital signal by the A/D converter 10 is output to the audio signal compressor 12.

The video signal input to the video signal compressor 11 is compressed by utilizing a compression method such as MPEG (Moving Picture Experts Group) 2 method, output to a memory 13 and stored. In the same way, the audio signal input to the audio signal compressor 12 is compressed by utilizing for example, a compression method such as the MPEG audio method, output to a memory 14 and stored.

The video data stored in the memory 13 and the audio data stored in the memory 14 is loaded by a memory controller 15 according to commands from a microcomputer 6 and input to a recording modulator 17 byway of a bus 16. The recording modulator 17 performs processing such as addition of error correction data and EFM (Eight to Fourteen Modulation) on the video data or the audio data that was input, and then outputs it to a disk 18 and records it. The disk 18 is an internal hard disk, a loadable optical disk or a magnetic disk, etc. The recording of data onto the disk 18 is performed by controlling the disk 18 by means of a disk controller 19 by commands from the microcomputer 6.

3

The data recorded on the disk 18 is loaded by the reproduction demodulator 20 and after processing such as EFM demodulation and error correction, the audio data is output to the memory 22 and the video data to the memory 21 and recorded. The data recorded on the memory 21 is loaded under the control of the memory controller 15 according to commands from the microcomputer 6 and output to the video decompressor 23. In the same way, audio data stored on the memory 22 is loaded and output to the audio decompressor 24.

The audio decompressor 23 decompresses (elongates) the compressed video data that was input and outputs this elongated video data to a memory 25, a motion detector circuit 26 and a video processor circuit 27. The video signal recorded on the memory 26 is output to the motion detector circuit 26 and the video processor circuit 27. The memory 25 has a memory sufficient for video processing and motion detection and is capable of recording video signals for several fields.

The motion detector circuit 26 performs motion detection by appropriately combining the field differential and frame differential (related in detail later). The information resulting from the motion detection is recorded in a memory 28. Processing such as generating play static images or expansion/compression is performed by the video processor circuit 27 utilizing the motion detection result information and the video data for a plurality of fields loaded (read-out) from the memory 28. The output from the video processor circuit 27 is supplied to the D/A converter 29 and converted to an analog signal. The video data converted to an analog signal is output to the video signal processor circuit 30. The video signal processor circuit 30 performs processing such as emphasis on the video signal that was input and outputs it as a component video signal to a monitor 41 connected to a record/reproduction device 1.

The audio data input to the audio decompressor 24 on the other hand, is supplied to the D/A converter 31. The digital signal for the audio data that was input to the D/A converter 31, is converted to an analog signal, output to the audio signal processor 32, specified processing such as amplification is performed and the analog signal is supplied to a connected speaker 24.

A console 33 is comprised of a remote controller, buttons, and jog dial, etc. This console 33 is operated by the user to perform a desired operation on the record/reproduction device 1. The microcomputer 6 controls each section according to the operating signals from the console 33.

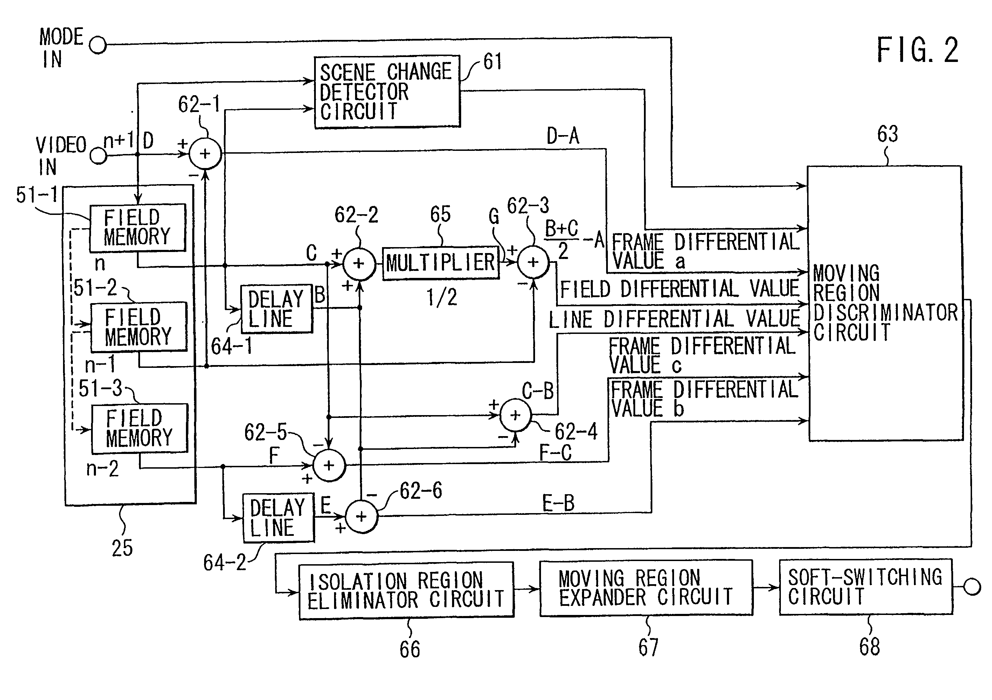

Fig. 2 is a block diagram showing the motion detector circuit 26 in more detail. A memory 25 is comprised of three field memories 51-1 through 51-3. The video data output from the video signal decompressor 23 is input to the field memory 51-1 of the memory 25 and also input to the scene change detector circuit 61 and an adder 62-1 of the motion detector 26. The video data stored in the field memory 51-1 is sequentially input to the field memory 51-2 and stored, the video data stored in the field memory 51-2 is sequentially input to the field memory 51-3 and stored.

When the video data input at time t is input to the adder 62-1, the video data output from the field memory 51-1 is the video data input at time t-1 of one field before. The video data output from the field memory 51-2 is video data from two fields before. The video data output from the field memory 51-3 is video data of three fields before. In other words, the video data for each field flows from the field memory 51-1 to the field memory 51-2, and from the field memory 51-2 to the field memory 52-3. In an actual circuit structure, instead of shifting the image data, a plurality of banks may be established within the memory 25 and the operation may be performed by switching these banks.

In the description related hereafter, the video data output from the field memory 51-1 at time t is field n, the video data input to the adder 62-1 of the motion detector circuit 26 is field n+1, the video data output from the field memory 51-2 is field n-1, and the video data output from the field memory 51-3 is field n-2.

A scene change detector circuit 61 detects scene changes by using video data of field n+1 from the video signal decompressor 23 and the video data of the field n from the field memory 51-1. Scene change detection is performed by means such as comparison methods for comparing histograms between fields and methods utilizing the field differential. The checked (discriminated) results are output to a moving region discriminator 63.

The adder 62-1 subtracts the video data of field n-1 output from the field memory 51-2, from the video data of field n+1 output from the video signal decompressor 23 (Hereafter, this subtracted value is frame differential a.) and sends the output to the moving region discriminator 63.

The video data of field n output from the field memory 51-1 is also output from the adder 62-2 and the delay line 64-1. The delay line 64-1 supplies to the adder 62-2, the video data for the line (line m-1) before the specified line (set as line m) of field n directly supplied from the field memory 51-1. The adder 62-2 adds the video data of line m of field n to the video data of line m-1 and outputs that value to a multiplier 65. The multiplier 65 multiplies this input value by .5 (1/2) and outputs this value to the adder 62-3. The video data of the line present in field n-1 and video data for the line present at the same position are in this way generated at field n.

The adder 62-3 subtracts the video data for the line positioned to correspond to a position matching field n-1 output from the field memory 51-2, from the video data for the line generated for field n, and thus calculates the field differential value and outputs this value to the moving region discriminator 63.

The video data of field n output from the field memory 51-1 is also input to the adder 62-4. The adder 62-4 is also input with video data of field n output from the delay line 64-1. The adder 62-4 subtracts the video data of line m-1 of field n (output from the delay line 64-1) from the video data for line m of field n (output from the field memory 51-1) in order to calculate the line differential value and outputs this value to the moving region discriminator 63.

Video data of field n-2 output from the field memory 51-3 is input to the adder 62-5 and the delay line 64-2. The delay line 64-2 undergoes the same processing as the delay line 64-1, when the video data supplied for example, to the line connecting to the adder 62-4 from the field memory 51-3 is video data for line m, then the video data of the prior line m-1 is supplied to the adder 62-6.

The adder 62-5 subtracts the video data of the field n (supplied from field memory 51-1), from the video data of field n-2 supplied from the field memory 51-3 to calculate the frame differential value (hereafter frame differential c) and outputs this value to the moving region discriminator 63.

The adder 62-6 subtracts the video data of the field n (supplied from delay line 64-1), from the video data of field n-2 supplied from the delay line 64-2 to calculate the frame differential value (hereafter frame differential b) and outputs this value to the moving region discriminator 63.

The moving region discriminator 63 determines the regions where motion is present by utilizing values (input values) calculated for each section, information relating to scene changes from the scene change detector circuit 61, as well as information relating to the mode from the microcomputer 6 and outputs these results to an isolation region eliminator 66. Details on the operation are related later however, motion detection is performed by the moving region discriminator 63, isolation region eliminator 66, moving region expander 67 as well as software switching circuit 68.

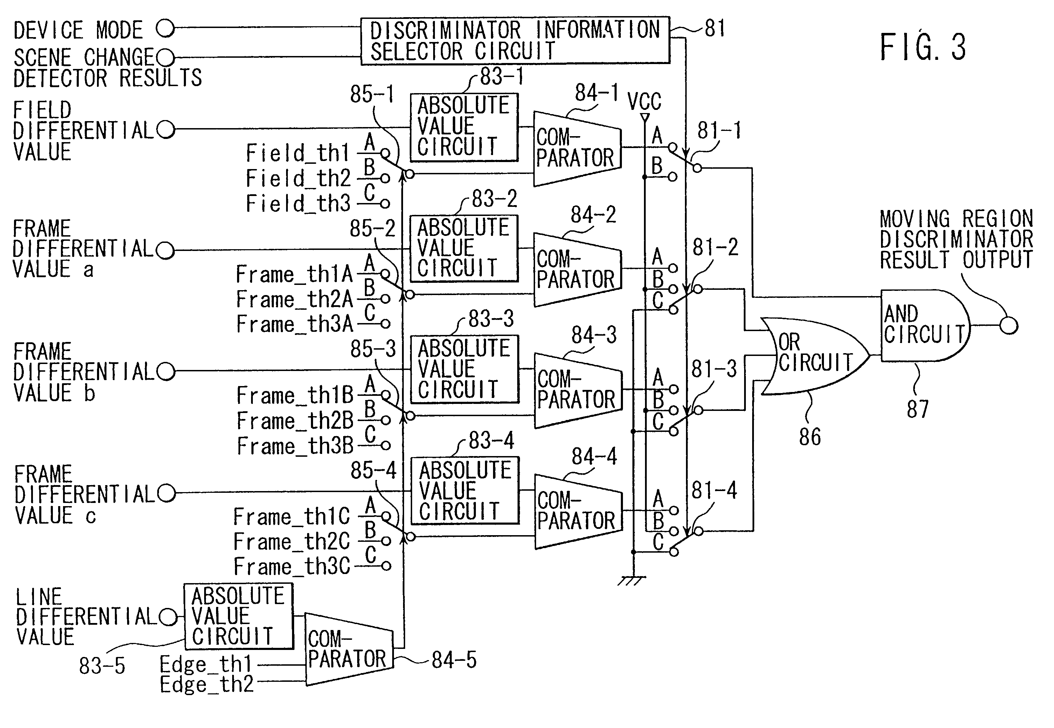

Fig. 3 is a drawing showing a detailed view of the moving region discriminator 63. Information relating to the mode from the microcomputer 6 (Fig. 1) and information relating to scene changes output from the scene change detector circuit 61 (Fig. 2) is input to the discriminator information selector 81. The discriminator information selector 81 controls the switches 81-1 through 81-4 based on the information that was input. The field differential value output from the adder 62-3 is input to the absolute value circuit 83-1 of the moving region discriminator 63, the absolute value calculated and output to the comparator 84-1. The output from the switch 85-1 is also input to the comparator 84-1. The comparison results from the comparator 84-1 are output to a terminal A of the switch 81-1.

In the same way, the frame differential value a, output from the adder 62-1 is input to the comparator 84-2 by way of the absolute value circuit 83-2. The output from the switch 85-2 is also input to the comparator 84-2. The output from the comparator 84-2 is supplied to the terminal A of the switch 82-1. The frame differential value b output from the adder 62-6 is input to the comparator 84-3 by way of the absolute value circuit 83-3. The output from the switch 85-3 is also input to the comparator 84-3. The output from the comparator 84-3 is also supplied to the terminal A of the switch 81-3. Also, the frame differential value c output from the adder 62-5 is input to the comparator 84-4 by way of the absolute value circuit 83-4 . The output from the switch 85-4 is also input to the comparator 84-4. The output from the comparator 84-4 is also supplied to the terminal A of the switch 81-4.

The line differential value from the adder 62-4 is input to the comparator 84-5 by way of the absolute value circuit 83-5. The comparator 84-5 compares the line differential value with a preset threshold value and controls the switches 8-1 through 81-4 based on the results of this comparison.

A supply voltage VCC (assigned a value of 1) is supplied to the respective B terminals of the switches 81-1 through 81-4. Another value (assigned a value of 0) is supplied to the respective C terminals of the switches 81-2 through 81-4. The outputs from the switches 81-2 through 81-4 are input to an OR circuit 86, the logic sums calculated and the result supplied to an AND circuit 87. The AND circuit 87 calculates the logical product of the values output from the switch 81-1 with the value output from the OR circuit 86 and outputs the result as a moving region discrimination check.

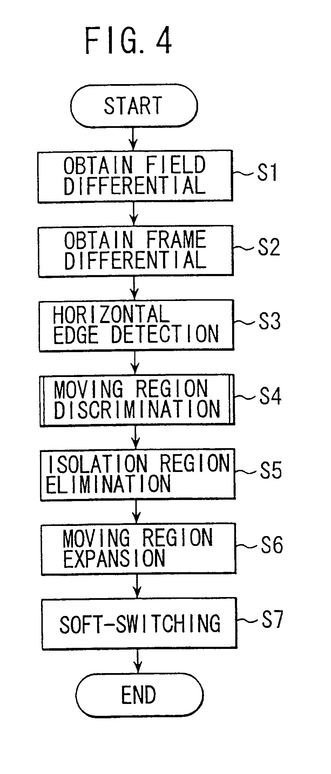

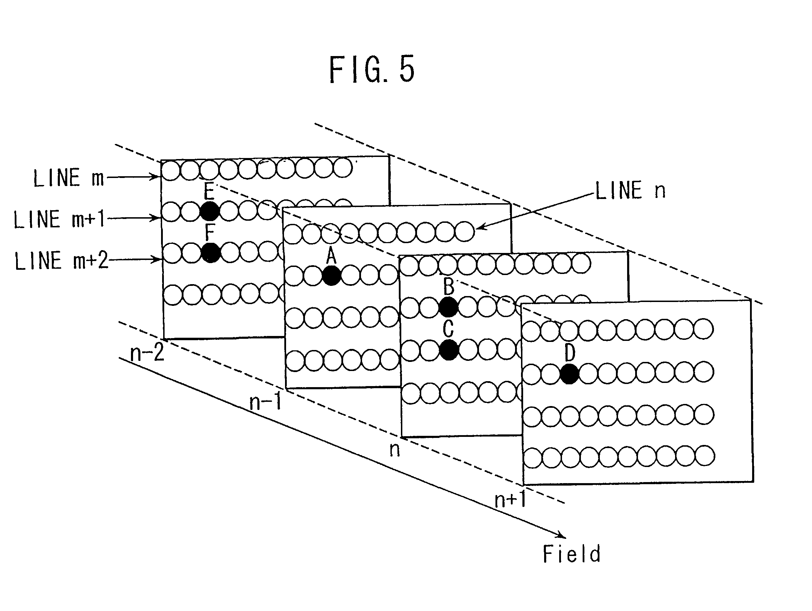

The operation of the motion detection circuit 26 is next described while referring to the flowchart in Fig. 4. The field differential is obtained in Step S1. The simulated position relationship of the field n+1 input to the motion detection circuit 26 at time t, the field n output from the field memory 51-1, the field n-1 output from the field memory 51-2, and the field n-2 output from the field memory 51-3 are shown in Fig. 5.

As shown in Fig. 5, the video signals are input in an interlace pattern so that an offset of one line occurs between the adjoining fields. In other words, the line at the highest position of field n-2 is set as line m, and when the next line is set as m+1, then line n at the highest position of field n-1, is at a position midway between line m and line m+1. The pixels positioned on a specified line within a specified field are pixels A through F as shown in Fig. 5.

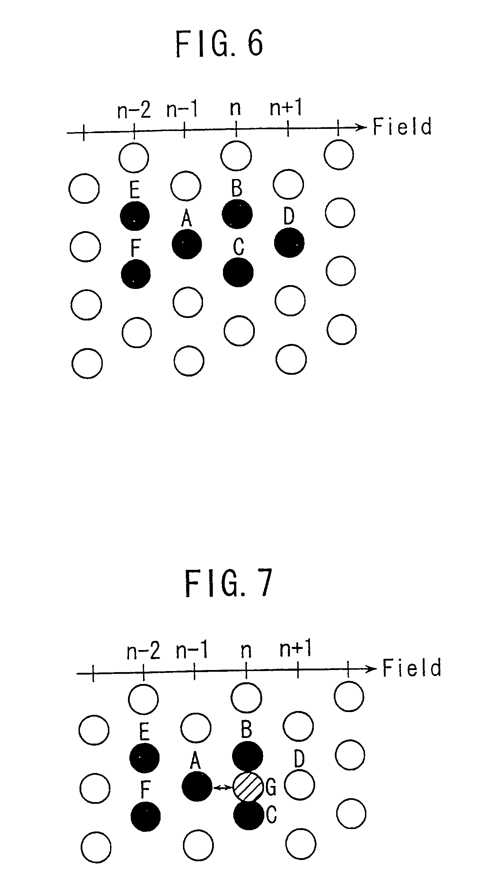

When a portion of Fig. 5 is isolated in the vertical direction and investigated according to time sequence or in other words, when a flat plane all of pixels A through F is isolated, then that portion appears as shown in Fig. 6. In order to input the video signals in an interlace pattern in this way, the pixel A of field n-1 for instance, is positioned between pixel B and pixel C of field n. In order to therefore calculate the field differential in Step S1, the position of pixel G located between the pixel B and pixel C of field n, must be interpolated as for example shown in Fig. 7, in order to calculate the field differential value of field n-1 with (versus) field n. In other words, the pixel B and pixel C are added, and half of that added value (average) becomes the pixel data for pixel G.

When the data stored in field memory 51-1 is field n, in the motion detector circuit shown in Fig. 2, the data stored in field memory 51-2 is field n-1. When the data for pixel C is output at this time from field memory 51-1, the data for pixel B is output from the delay line 64-1. The data for pixel B and the data for pixel C are therefore added by the adder 62-2. This summed data is input to the multiplier 65 and multiplied by 1/2 so that an average value is calculated and output to the adder 62-3. The data for pixel A of the field n-1 output from the field memory 51-2 is also input to the adder 62-3 and the input data of pixel A, is subtracted from the average value (pixel G data) of pixel B and pixel C output from the multiplier 65 to calculate the field differential value.

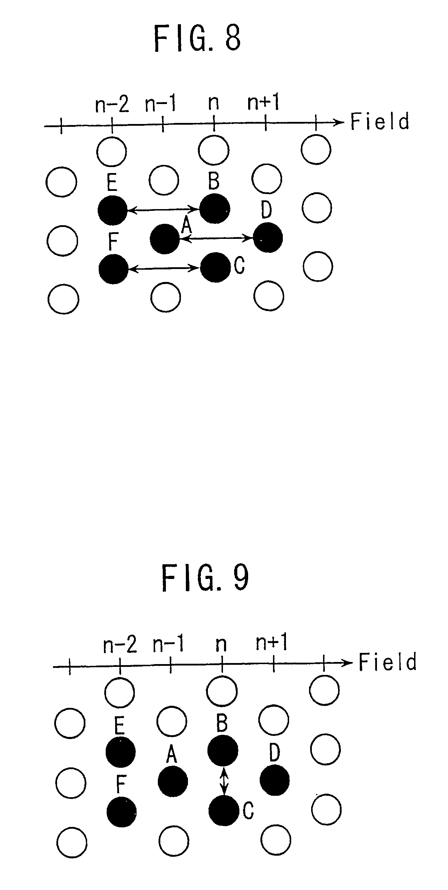

When the field differential value is calculated by performing this same process for all pixels present within each of the fields, the process proceeds to step S2 and the frame differential value is calculated. The frame differential value is calculated by utilizing pixel data of fields having the same line array. In other words, the respective frame differential values between field n-2 and field n, the field n-1 and field n+1 are calculated as shown in Fig. 8. In the motion detection circuit 26 shown in Fig. 2 for instance, when the pixel D data of field n+1 is input, the pixel A data of field n-1 is output from the field memory 51-2. The data of pixel A and the data for pixel B are consequently input to the adder 62-1. The frame differential value a is calculated by subtracting the pixel D data from the pixel A data.

In this embodiment, rather than just one frame differential value, the frame differential value is further calculated by using pixels (pixels B, C, E, F for pixels A, D) in lines positioned above and below the line with pixels (pixel of interest) whose frame differential value was already calculated, and this value used in discriminating the moving image region as related later on. Thus, as described above, the frame differential values of pixel B and pixel E, and pixel C versus pixel F are respectively calculated along with the process for calculating the frame differential value using pixel A and pixel F.

When the pixel C data of field n is output from the field memory 51-1 as described above, the pixel B data is output from the delay line 64-1 so that pixel B data is utilized. The pixel F data of field n-2 from the field memory 51-3 is positioned to correspond to pixel C at this time. The pixel E data is output from the delay line 64-2. The frame differential value b from the pixel B and pixel E, and the frame differential value c from pixel C and pixel F are respectively calculated.

When the frame differential values are calculated in this way in Step S2, the horizontal edge is then detected in Step S3. The horizontal edge is detected by obtaining the differential value between lines, and upper and lower adjoining pixel data present within one field is used. In other words, the differential of pixel B with pixel C is obtained for example, when detecting the edge in field n, as shown in Fig. 9. In the motion detection circuit shown in Fig. 2, the pixel C data of field n output from the field memory 51-1, and the pixel B data of field n output from the delay line 64-1 to correspond to that pixel C data, are input to the adder 62-4, and the line differential value is calculated by subtracting the pixel B data from the pixel C data.

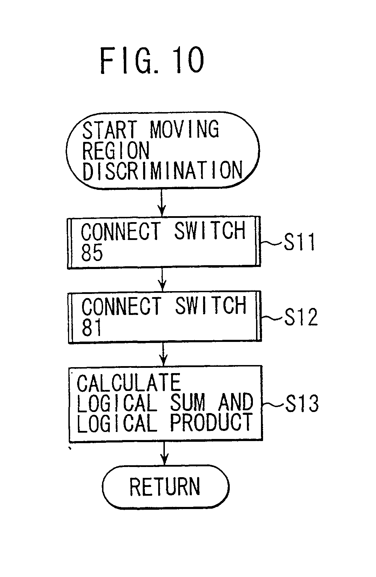

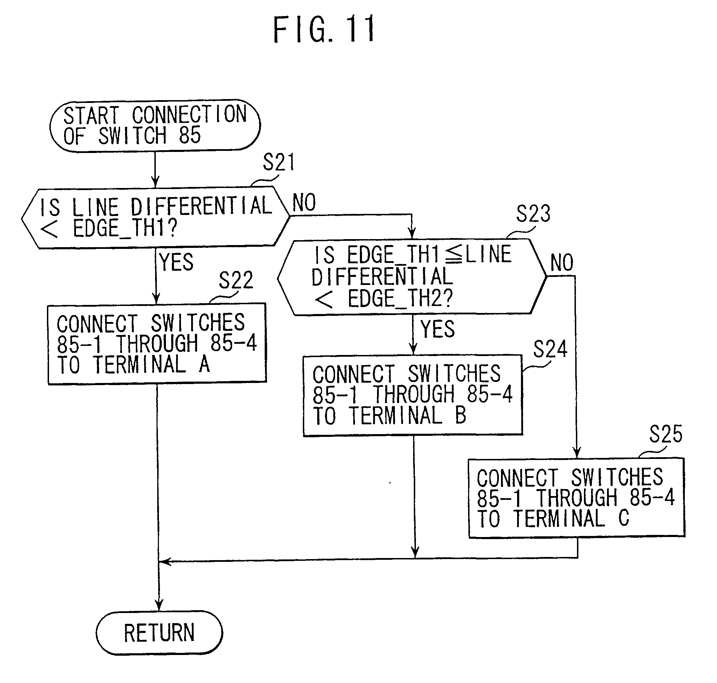

When the line differential value is calculated in this way, the process proceeds to step S4, and moving region discrimination is performed with the moving region discriminator 63 by using the differential values calculated in steps S1 through S3. Fig. 10 is a flowchart showing the moving region discrimination process of Step S4 in more detail. In Step S11 first of all, connection processing of switches 85-1 through 85-4 (Fig. 3) of moving region discriminator 63 is performed. Fig. 11 is a flowchart showing the connection process of the switch 85.

In Step S21, in the comparator 84-5, a determination is made as to whether the line differential value (with absolute values calculated by absolute value circuit 83-5) is smaller than Edge_th1 or not. If determined that the line differential value is smaller than Edge_th1, then the process proceeds to step S22, and the switches 85-1 through 85-4 are respectively connected to the terminal A. The threshold value Field_th1 of the field differential is supplied to the comparator 83-1, by the switch 85-1 connecting to terminal A. In the same way, the threshold value Frame_th1A of frame differential a, is supplied to the comparator 84-2 by connecting the switch 85-2, the threshold value Frame_th1B of frame differential b is supplied to the comparator 84-3 by connecting the switch 85-3, and the threshold value Frame_th1C of frame differential c is supplied to the comparator 84-4 by connecting the switch 85-4.

When determined in Step S21 on the other hand, that the line differential value is smaller than Edge_th1, the process proceeds to Step S23 and a check made as to whether or not the line differential value is larger than Edge_th1 or smaller than Edge_th2. When determined that the line differential is larger than Edge_th1 and also smaller than Edge_th2, the process proceeds to Step S24 and the switches 85-1 through 85-4 are respectively connected to the terminal B. The connection of the switches 85-1 through 85-4 to the respective terminal B terminal, supplies the specified threshold value to the comparators 84-1 through 84-4.

When determined in Step S23 that the line differential value is larger than the Edge_th2, the process proceeds to Step S25 and the switches 85-1 through 85-4 are respectively connected to the terminal C. The specified threshold values are supplied to the comparators 84-1 through 84-4 by connecting the switches 85-1 through 85-4 to terminal C.

The switches 85-1 through 85-4 are thus connected to one of the terminals A through C according to the line differential value. The comparator 84-1 compares the field differential whose absolute value was calculated, with the threshold value supplied from the switch 85-1. Comparison results showing the field differential value is larger, are treated as a moving region candidate and a "1" is output to the switch 81-1. Comparison results showing the field differential value is smaller, are treated as a still region candidate, and a "0" is output to terminal A of the switch 81-1.

The comparators 84-2 through 84-4 in the same way, compare the respectively input frame differential values a through c, with the threshold values supplied from the corresponding switches 85-1 through 85-4, and based on the comparison results, output a 0 or a 1 to the corresponding switches 81-2 through 81-4.

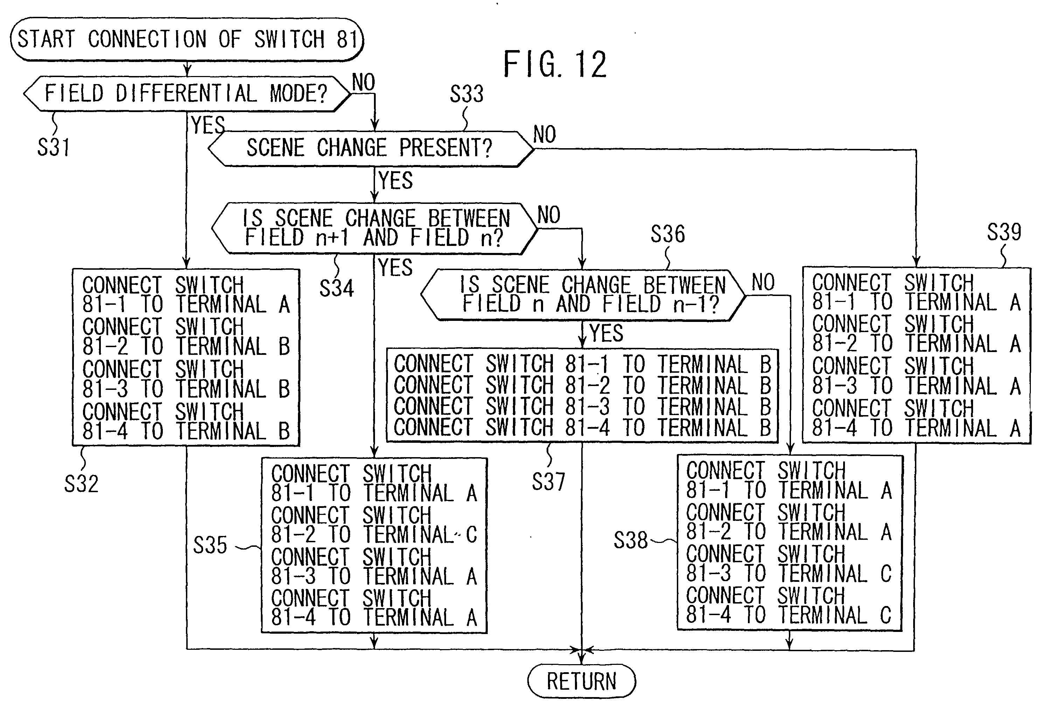

The switch 85 connections are made in Step S11 (Fig. 10) in this way, and when the respective comparison results of the differential values and threshold value are output, the connections for the switches 81-1 through 81-4 are made in Step S12. A flowchart illustrating the detailed operation of the connection process for switch 81 in Step S12 is shown in Fig. 12.

In Step S31, the discriminator information selector 81 in the moving region discriminator 63 determines if a field differential mode is present or not. The device mode and the scene change detection results are input to the discriminator information selector 81. The device mode is mode information for the record/reproduction device 1. If the record/reproduction device 1 is for example, a DVD (Digital Video Disk) player, then video data effective during times such as in search, will sometimes only be input intermittently. In this embodiment, the processing during normal playback uses four consecutive fields of video information. Incidentally, when two consecutive fields are input intermittently, the process mode must be changed so that processing will use just the video information of the consecutive two fields. In such cases moving region discrimination must be performed only with the field differential information. This kind of mode is called the field differential mode.

When the discriminator information selector 81 determines in Step S31 that a field differential mode is present, the process proceeds to Step S32 and the switch 81-1 is connected to terminal A, and switches 81-2 through 81-4 are connected to terminal B. Then, a "1" or "0" output from the corresponding comparators 84-1 through 84-4 is supplied to terminal A of the switch 81-1 through 81-4, and a "1" is supplied to the terminal B. Also, a "0" is supplied to terminal C of switches 81-2 through 81-4.

When determined by the discriminator information selector 81 in Step S31 on the other hand, that there is no field differential mode, the process proceeds to Step S33 and a check made for whether a scene change is present or not. Besides supplying the scene change information from the scene change detector 61, information detected beforehand may be recorded for example from a recording medium and loaded when required.

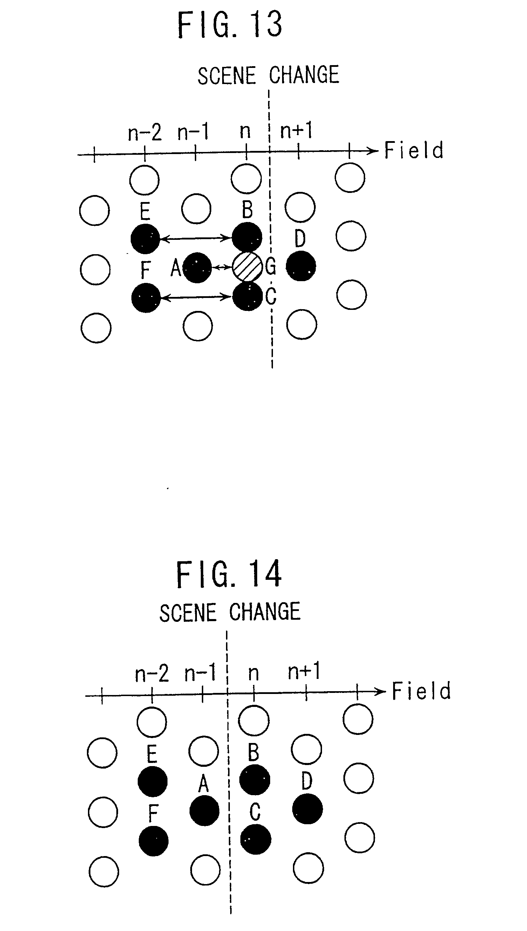

When determined in Step S33 that there is a scene change, a determination is made in the processing from step 34, between what fields the scene change is present, and processing implemented according to those results. First of all, a check is made in Step S34 as to whether or not a scene change is present between field n+1 and field n. When a scene change is found between field n+1 and field n, the operation proceeds to Step S35. As shown in Fig. 13, when a scene change is determined to be present between field n and field n+1, the differential value is calculated utilizing the pixel D data of field n+1, or in other words, the information from frame differential value a, is not used in discriminating the moving region. In other words, the moving region is discriminated using only the information obtained from the frame differential value and field differential values b and c.

In Step S35 therefore, the switch 81-1 is connected to the terminal A (comparison results from field differential value), the switch 81-2 is connected to terminal C ("0" since information from frame differential value a is not used), and the switches 81-3 and 81-4 are connected to the terminal A (comparison results from frame differential values b, c).

In Step S34, a check is made as to whether or not a scene change is present between field n+1 and field n. In Step S36 a check (or determination) is made as to whether a scene change is present between field n and field n-1. When a scene change is determined to be present between field n and field n-1 as shown in Fig. 14, the process proceeds to step S37. No scene change being present in this way, between the field n and field n-1, is interpreted as meaning no correlation is present between field n and field n-1 and the entire screen is set as the moving region. Therefore, when the moving region is determined regardless of the comparison results obtained from the field differential value and frame differential values a through c, the switches 81-1 through 81-4 are respectively connected to terminal B, and a "1" is supplied to the OR circuit 86 and to the AND circuit 87.

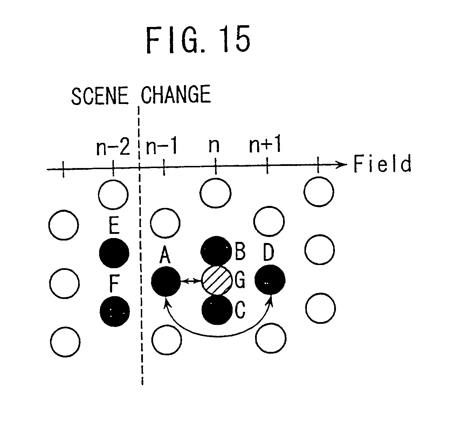

In Step S36, when no scene change is found to be present between field n and field n-1, then the field change is present between field n-1 and field n-2 as shown in Fig. 15. The process now proceeds to step S38 and switches 81-1, and 81-2 are connected to terminal A, and the switches 81-3 and 81-4 are connected to terminal C. These connections are made so that the information obtained from pixels E, F of the field n-2 is not used. In other words, so that the comparison results (values output from comparators 84-3, 84-4) obtained from frame differential value b frame differential value c calculated from pixels E and F will not be used. The switches 81-3 and 81-4 are therefore respectively connected to the terminal C and an "0" is supplied to the OR circuit 86.

When there is a scene change, the differential is selected for use in discriminating the moving region as described above, however when determined in Step S33 than no scene change is present, the status is as shown in Fig. 6, so the moving region is discriminated by utilizing all information obtained from pixel A through pixel F. In other words, the switches 81-1 through 81-4 in Step S39 are respectively connected to terminal A so that the moving region is discriminated by utilizing results from comparing the threshold value and frame differential value a through frame differential value c, as well as the field differential value calculated from pixels A through F.

When the switches 81-1 through 81-4 are connected to a terminal from among terminal A, terminal B or terminal C, in Step S12 (Fig. 10), the process proceeds to Step S13. In Step S13, the OR circuit 86 and the AND circuit 87 derive the respective logical sums and logical products from the data that was input. The OR circuit 86 calculates in principle, the logic sum from the data supplied from the switches 81-2 through 81-4, however this is only when results obtained from the three frame differential values a through c are all static (still), and provided to output data with discrimination results that are static (still) based on the frame differential information.

The AND circuit 87 gives the product of the moving region results obtained from the field differential value (results output from switch 81-1) and the moving region results (results output from OR circuit 86) obtained from the frame differential value to obtain the logical sum, and outputs the final moving region discrimination results to the moving region discriminator 63. Moving region results obtained from the field differential value and moving region results obtained from the frame differential value are output as "1" as moving region discrimination results only when the moving region for both the frame and field differential is "1".

The accuracy of the motion detection can be improved in this way, by detecting the motion range while switching the field differential information and frame differential information for use, from video characteristic information such as scene change information, horizontal edge information, and device mode information.

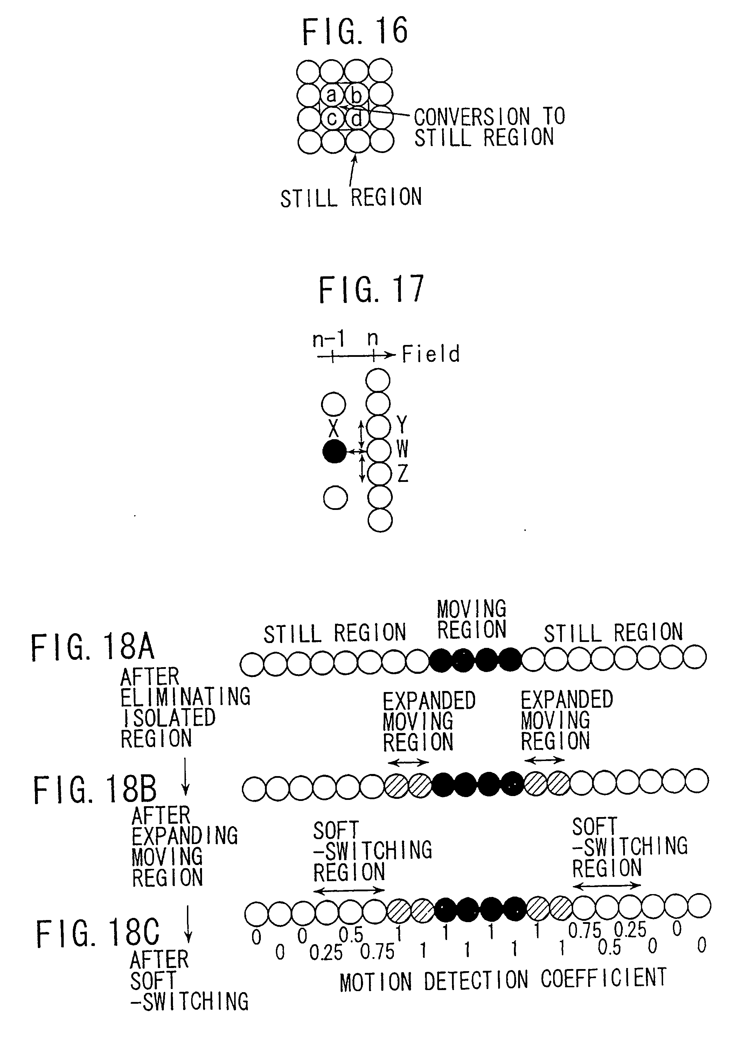

When the moving region discrimination in Step S4 (Fig. 4) is finished, the process proceeds to Step S5 and isolation region elimination is performed by the isolation region eliminator 66. The isolation region here, is a region determined to be a moving region, present within a region determined to be a still region. As shown in Fig. 16, even in cases where pixels a through d are determined as a moving region, when the pixels surrounding those pixels are determined to be a still region, then the pixels a through d are all converted to a still region, and treated as a still region. However, conversion of a moving region to a still region is limited to moving regions within a specified size range. This isolation region elimination processing is intended to alleviate the effects from noise, or in other words eliminate regions mistakenly determined due to noise, to be moving regions.

When isolation region elimination is finished in Step S5, the process proceeds to Step S6 and expansion processing of the moving region begins by means of the moving region expander 22. Moving region expansion is a process to convert from a still region to a moving region, a specified number of pixels positioned at both horizontal ends of a region determined to be a moving region. When the moving region expansion in Step S6 is finished, soft-switching is performed in Step S7 by the soft-switching circuit 68. Soft-switching provides a coefficient to smoothly change the boundary of the moving region and still region. When the video processor 27 generates a video signal using results from the motion detector circuit 26, the results of the motion detection are used as the mixing ratio for two field images, so a method such as soft-switching to achieve a smooth change in numerical values is preferred.

Video processing by the video processor 27 is described next while referring to Fig. 17. When creating a frame still image with no movement (blurring) from field n and field n-1, the image W data is calculated according to Equation 1 by using the data of adjoining pixels X, Y and Z.

$$W = ((Y+Z)/2) \times md + X \times (1-md) \qquad \text{(Equation 1)}$$

In Equation 1, X, Y, Z, W are the respective data for pixels X, Y, Z, and md is the motion detection coefficient. The motion detection coefficient md is a numerical value greater than 0 or less than 1, and indicates a still region when 0, and a moving region when 1.

By calculating the data for pixel W in this way, the motion detector coefficient md, rather than having only a 1 or a 0 value, can have smoothly changing values that allow acquiring images with a smooth boundary between the moving region and still region.

When the soft-switching between the moving region and still region is finished in Step S7, the results are output to the result memory 28 (Fig. 1) as motion detection results, and stored. These motion detection results stored in the result memory 28 are utilized when the video processor 27 generates the video signal as described above.

The process of Steps S5 through S7 is next described while referring to Figs. 18A to 18C. Here, Fig. 18A shows the pixels on the line after elimination of the isolation region in Step S5. The four moving region pixels are positioned in the center, and the still region pixels are positioned on both sides of the moving region. When still region and moving regions are present, and the moving region is expanded in Step S6, the status becomes as shown in Fig. 18B. In the state shown in Fig. 18B, two of the still region pixels positioned at each end of the four moving region pixels, are newly converted to the moving region. In the example in Fig. 18B, two pixels are converted to the moving region, however a different number of pixels may of course, also be converted.

When soft-switching is further performed in Step S7, after the status shown in Fig. 18B, the state shown in Fig. 18C is obtained. In other words, the motion detection coefficient for pixels within the moving region including the expanded moving region, are all 1, and the motion detection coefficient in sequence, from those still region pixels most closely adjoining that region, changes in steps, such as from 0.75, 0.5, and 0.25. The portion where the coefficient changes in steps is the region subjected to soft-switching. The motion detection coefficients of still regions other soft-switching regions are all zero (0). The number for the step-like changes may also be set to even smaller figures.

In the above embodiment, as one example, a LPF (Low Pass Filter) may applied to the video signal input to the motion detection circuit 26 in order to reduce noise, and alternatively an LPF may be applied to the field differential value of the frame differential value input to the moving region discriminator 63 to reduce noise.

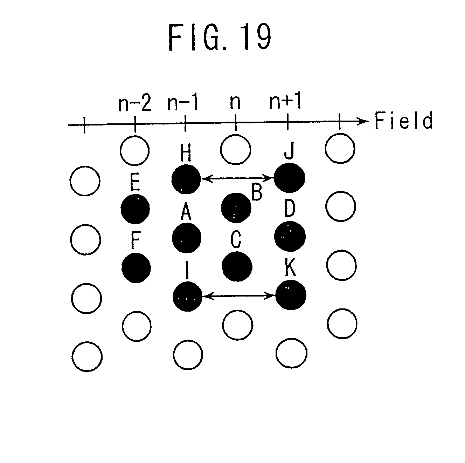

The information used in the discriminator information selector 81 of the moving region discriminator 63 is not limited to device mode and scene change detection results, and other information may also be utilized. Also the above embodiment, utilized the frame differential values a through c, however other differential values may also be used. As shown in Fig. 19 for example, the frame differential value may be calculated utilizing respectively the pixel H and pixel J, the pixel I and pixel K, and this value used in motion detection.

Also, two threshold values were used in the comparator 84-5 in the moving region discriminator 63 shown in Fig. 3, and three respective threshold values were utilized in the comparators 84-1 through 84-4 and compared with differential values that were input however, comparisons may also be made using even more threshold values.

The above mentioned series of processes can also be implemented with hardware, however software may also be used to implement the processes. When implementing a series of processing with software, a program comprised of that software may be installed in a computer with an internal record/reproduction device 1 as the custom hardware or, various programs may be installed for instance in a general-purpose computer capable of running those various programs.

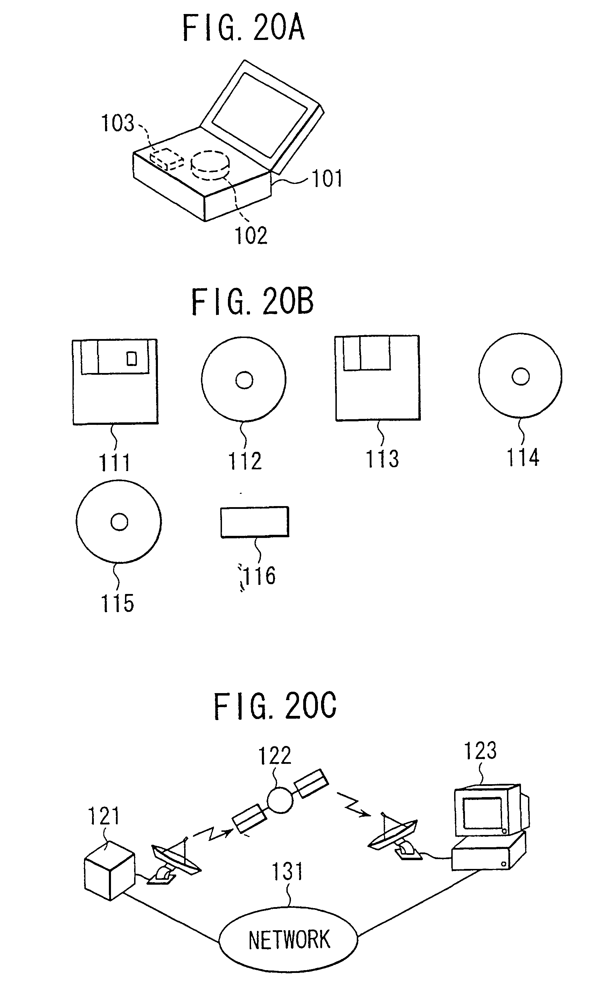

An example is described while referring to Figs. 20A to 20C, for installing a program in a computer to run a series of processes as described above, with a medium utilized to allow the computer to run the processes. The computer in this example is a general-purpose computer.

A program as shown in Fig. 20A, can be provided to the user while already installed on a recording medium such as a hard disk 102 or a semiconductor memory 103 inside a computer 101.

Alternatively, the program can be provided as shown in Fig. 20B stored temporarily or permanently on a recording medium such as a floppy disk 111, a CD-ROM (Compact Disk-Read Only Memory) 112, a MO (Magneto-Optical) disk 113, a DVD (Digital Versatile Disk) 114, a magnetic disk 115, a semiconductor memory 115, or as package software.

The program as further shown in Fig. 20C can be sent by radio waves from a download site 121 to a personal computer 123 by way of an artificial satellite 122 for digital satellite broadcasts, or sent by cable to the personal computer 123 by way of a network 131 such as a local area network or the Internet and can be stored for instance on a hard disk inside the personal computer 123.

The medium as referred to in this text is a concept used in a broad sense including all of these mediums.

The steps listed in the program provided by the medium in this text, comply with the sequence as listed in this text, and the processes performed over time, may not always be performed over time but may be performed in parallel or individually.

**Claims**

1. An image processing apparatus comprising:

   memory means (25; 51-1 to 51-3) for storing an image signal;
   field differential calculation means (26) for calculating a field differential value from adjacent fields of said image signal stored in said memory means;
   frame differential calculation means (26) for calculating a frame differential value from corresponding fields in adjacent frames of said image signal stored in said memory means;
   extraction means (26; 63; 83-5, 84-5) for extracting an image edge of an image represented by said image signal;
   setting means (26; 63; 85-1 to 85-4, 84-5) for setting threshold values based on said image edge extracted by said extraction means;
   comparison means (26; 63; 84-1 to 84-4) for comparing the threshold values set by said setting means respectively with said field differential value and said frame differential value; and
   output means (26; 63; 81-1 to 81-4, 86, 87) for outputting results from said comparison means or outputting specified pre-set values, according to scene changes; and
   detection means (63) f or detecting a moving region of the image based on said image signal by utilizing the field differential value calculated by said field differential calculation means and the frame differential value calculated by said frame differential means by calculating a logical product and logical sum of the results outputted by said output means.

2. An image processing apparatus as claimed in claim 1, wherein:

said frame differential calculation means calculates the frame differential value for target pixels, and a frame differential value for another group of pixels positioned on at least one of the lines from among the lines positioned above and below said target pixels, and
said detection means detects the moving region of the image based on said image signal by utilizing two or more frame differential values calculated by said frame differential calculation means and said field differential values.

3. An image processing method, comprising the steps of:

storing an image signal;
calculating a field differential value from adjacent fields of said stored image signal;
calculating a frame differential value from corresponding fields in adjacent frames of said stored image signal;
extracting an image edge of an image represented by said image signal;
setting threshold values based on said image edge;
comparing said set threshold values respectively with said field differential value and said frame differential value ; and
outputting either said comparison results or preset specified values,according to scene changes; and
detecting an image moving region of the image based on said image signal by utilizing said calculated field differential value and said calculated frame differential value by calculating a logical product and logical sum of the results outputted by said outputting step.

4. An image processing method as claimed in claim 3, wherein:

said frame differential calculation step calculates the frame differential value for target pixels, and a frame differential value for another group of pixels positioned on at least one of the lines from among the lines positioned above and below said target pixels, and
said detection step detects the moving region of the image based on said image signal by utilizing said calculated two or more frame differential values and said field differential values.

5. A computer program product directly loadable into the internal memory of a digital computer, comprising software code portions for performing the steps of claims 3 or 4 when said product is run on a computer.

**Patentansprüche**

1. Bildverarbeitungsvorrichtung, welche aufweist:

eine Speichereinrichtung (25; 51-1 bis 51-3) zum Speichern eines Bildsignals;
eine Felddifferenz-Berechnungseinrichtung (26) zum Berechnen eines Felddifferenzwertes von benachbarten Feldern des Bildsignals, welches in der Speichereinrichtung gespeichert ist;
eine Rahmendifferenz-Berechnungseinrichtung (26) zum Berechnen eines Rahmendifferenzwerts von entsprechenden Feldern in benachbarten Rahmen des Bildsignals, welches in der Speichereinrichtung gespeichert ist;
eine Extraktionseinrichtung (26; 63; 83-5, 84-5) zum Extrahieren einer Bildflanke eines Bilds, welches durch das Bildsignal dargestellt wird;
eine Einstellungseinrichtung (26; 63; 85-1 bis 85-4, 84-5) zum Einstellen von Schwellenwerten auf der Basis der Bildflanke, die durch die Extraktionseinrichtung extrahiert wurde;
eine Vergleichseinrichtung (26; 63; 84-1 bis 84-4) zum Vergleichen der Schwellenwerte, welche durch die Einstellungseinrichtung entsprechend mit dem Felddifferenzwert bzw. dem Rahmendifferenzwert eingestellt wurden; und
eine Ausgabeeinrichtung (26; 63; 81-1 bis 81-4, 86, 87) zum Ausgeben von Ergebnissen von der Vergleichseinrichtung oder zum Ausgeben spezifizierter voreingestellter Werte gemäß Szenen-Änderungen; und
eine Ermittlungseinrichtung (63) zum Ermitteln eines Bewegungsbereichs des Bilds auf der Basis des Bildsignals unter Verwendung des Felddifferenzwertes, der durch die Felddifferenz-Berechnungseinrichtung berechnet wurde, und des Rahmendifferenzwerts, der durch die Rahmendifferenzeinrichtung berechnet wurde, durch Berechnen eines logischen Produkts und einer logischen Summe der Ergebnisse, die durch die Ausgabeeinrichtung ausgegeben werden.

**2.** Bildverarbeitungsvorrichtung nach Anspruch 1, wobei:

die Rahmendifferenz-Berechnungseinrichtung den Rahmendifferenzwert für Zielpixel und einen Rahmendifferenzwert für eine andere Gruppe von Pixeln, welche auf zumindest einer der Zeilen positioniert ist, von den Zeilen, welche über und unter den Zielpixeln positioniert sind, berechnet, und
die Ermittlungseinrichtung den Bewegungsbereich des Bilds auf der Basis des Bildsignals unter Verwendung von zwei oder mehreren Rahmendifferenzwerten, welche durch die Rahmendifferenz-Berechnungseinrichtung berechnet wurden, und der Felddifferenzwerte ermittelt.

**3.** Bildverarbeitungsverfahren, welches folgende Schritte aufweist:

Speichern eines Bildsignals;
Berechnen eines Felddifferenzwertes von benachbarten Feldern des gespeicherten Bildsignals;
Berechnen eines Rahmendifferenzwertes von entsprechenden Feldern in benachbarten Rahmen des gespeicherten Bildsignals;
Extrahieren einer Bildflanke eines Bilds, welches durch das Bildsignal dargestellt wird;
Einstellen von Schwellenwerten auf der Basis der Bildflanke;
Vergleichen der eingestellten Schwellenwerte mit dem Felddifferenzwert bzw. dem Rahmendifferenzwert; und
Ausgeben entweder der Vergleichsergebnisse oder der voreingestellten spezifizierten Werte gemäß Szenen-Änderungen; und
Ermitteln eines Bildbewegungsbereichs des Bilds auf der Basis des Bildsignals unter Verwendung des berechneten Felddifferenzwertes und des berechneten Rahmendifferenzwertes durch Berechnen eines logischen Produkts und der logischen Summe der Ergebnisse, die durch den Ausgabeschritt ausgegeben werden.

**4.** Bildverarbeitungsverfahren nach Anspruch 3, wobei:

der Rahmendifferenz-Berechnungsschritt den Rahmendifferenzwert für Zielpixel und einen Rahmendifferenzwert für eine andere Gruppe von Pixeln, welche auf zumindest einer der Zeilen unter den Zeilen positioniert sind, die über und unter den Zielpixeln positioniert sind, berechnet, und
der Ermittlungsschritt den Bewegungsbereich des Bilds auf der Basis des Bildsignals unter Verwendung der berechneten zwei oder mehreren Rahmendifferenzwerte und der Felddifferenzwerte ermittelt.

**5.** Computerprogrammprodukt, welches unmittelbar in den internen Speicher eines Digitalcomputers ladbar ist, welches Software-Codebereiche aufweist, um die Schritte nach Anspruch 3 oder 4 auszuführen, wenn das Produkt auf einem Computer läuft.

**Revendications**

**1.** Dispositif de traitement d'images comprenant :

des moyens de mémoire (25 ; 51-1 à 51-3) pour mémoriser un signal d'image ;
des moyens de calcul différentiel de champ (26) pour calculer une valeur différentielle de champ à partir de champs adjacents dudit signal d'image mémorisé dans lesdits moyens de mémoire ;
des moyens de calcul différentiel de trame (26) pour calculer une valeur différentielle de trame à partir de champs correspondants dans des trames adjacentes dudit signal d'image mémorisé dans lesdits moyens de mémoire ;
des moyens d'extraction (26; 63; 83-5, 84-5) pour extraire un bord d'image d'une image représentée par ledit signal d'image ;
des moyens de détermination (26 ; 63 ; 85-1 à 85-4, 84-5) pour déterminer des valeurs de seuil sur la base dudit bord d'image extrait par lesdits moyens d'extraction ;
des moyens de comparaison (26 ; 63 ; 84-1 à 84-4) pour comparer les valeurs de seuil déterminée par lesdits moyens de détermination respectivement avec ladite valeur différentielle de champ et ladite valeur différentielle de trame ; et
des moyens de sortie (26 ; 63 ; 81-1 à 81-4, 86, 87) pour transmettre en sortie des résultats provenant desdits moyens de comparaison ou transmettre en sortie des valeurs prescrites spécifiées, selon des changement de décors ; et
des moyens de détection (63) pour détecter une région mobile de l'image sur la base dudit signal d'image en utilisant la valeur différentielle de champ calculée par lesdits moyens de calcul différentiel de champ et la valeur différentielle de trame calculée par lesdits moyens de calcul différentiel de trame en calculant un produit logique et une somme logique des résultats transmis en sortie par lesdits moyens de sortie.

2. Dispositif de traitement d'images selon la revendication 1, dans lequel :

lesdits moyens de calcul différentiel de trame calculent la valeur différentielle de trame pour des pixels cibles et une valeur différentielle de trame pour un autre groupe de pixels positionnés sur au moins une des lignes parmi les lignes positionnées au-dessus et au-dessous desdits pixels cibles, et

lesdits moyens de détection détectent la région mobile de l'image sur la base dudit signal d'image en utilisant deux valeurs différentielles de trame ou plus calculées par lesdits moyens de calcul différentiel de trame et lesdites valeurs différentielles de champ.

3. Procédé de traitement d'images, comprenant les étapes consistant à :

mémoriser un signal d'image ;
calculer une valeur différentielle de champ à partir de champs adjacents dudit signal d'image mémorisé ;
calculer une valeur différentielle de trame à partir de champs correspondants dans des trames adjacentes dudit signal d'image mémorisé ;
extraire un bord d'image d'une image représentée par ledit signal d'image ;
déterminer des valeurs de seuil sur la base dudit bord d'image ;
comparer les valeurs de seuil déterminée par lesdits moyens de détermination respectivement avec ladite valeur différentielle de champ et ladite valeur différentielle de trame ; et
transmettre en sortie lesdits résultats de comparaison ou des valeurs prescrites spécifiées, selon des changement de décors ; et
détecter une région mobile de l'image du signal d'image sur la base dudit signal d'image en utilisant ladite valeur différentielle de champ calculée et ladite valeur différentielle de trame calculée en calculant un produit logique et une somme logique des résultats transmis en sortie par ladite étape de transmission en sortie.

4. Procédé de traitement d'images selon la revendication 3, dans lequel :

ladite étape de calcul différentiel de trame calcule la valeur différentielle de trame pour des pixels cibles et une valeur différentielle de trame pour un autre groupe de pixels positionnés sur au moins une des lignes parmi les lignes positionnées au-dessus et au-dessous desdits pixels cibles, et

ladite étape de détection détecte la région mobile de l'image sur la base dudit signal d'image en utilisant lesdites deux valeurs différentielles de trame calculées ou plus et lesdites valeurs différentielles de champ.

5. Produit de programme d'ordinateur directement chargeable dans la mémoire interne d'un ordinateur numérique, comprenant des parties de code de logiciel pour effectuer les étapes des revendications 3 et 4 quand ledit produit est fait fonctionner sur un ordinateur.

FIG. 1

EP 1 058 449 B1

FIG. 2

FIG. 3

MOVING REGION
DISCRIMINATOR
RESULT OUTPUT

# FIG. 4

```
┌─────────────┐
│    START    │
└─────────────┘
       │
       ▼
┌─────────────────┐
│ OBTAIN FIELD    │ ～S1
│ DIFFERENTIAL    │
└─────────────────┘
       │
       ▼
┌─────────────────┐
│ OBTAIN FRAME    │ ～S2
│ DIFFERENTIAL    │
└─────────────────┘
       │
       ▼
┌─────────────────┐
│ HORIZONTAL      │ ～S3
│ EDGE DETECTION  │
└─────────────────┘
       │
       ▼
┌─────────────────┐
│ MOVING REGION   │ ～S4
│ DISCRIMINATION  │
└─────────────────┘
       │
       ▼
┌─────────────────┐
│ ISOLATION REGION│ ～S5
│ ELIMINATION     │
└─────────────────┘
       │
       ▼
┌─────────────────┐
│ MOVING REGION   │ ～S6
│ EXPANSION       │
└─────────────────┘
       │
       ▼
┌─────────────────┐
│ SOFT-SWITCHING  │ ～S7
└─────────────────┘
       │
       ▼
┌─────────────┐
│     END     │
└─────────────┘
```

FIG. 5

# FIG. 6

# FIG. 7

# FIG. 8

# FIG. 9

# FIG. 10

```
┌──────────────────┐
│ START MOVING     │
│ REGION           │
│ DISCRIMINATION   │
└──────────────────┘
         │
         ▼
┌──────────────────┐
│ CONNECT SWITCH   │ ～S11
│ 85               │
└──────────────────┘
         │
         ▼
┌──────────────────┐
│ CONNECT SWITCH   │ ～S12
│ 81               │
└──────────────────┘
         │
         ▼
┌──────────────────┐
│ CALCULATE        │
│ LOGICAL SUM AND  │ ～S13
│ LOGICAL PRODUCT  │
└──────────────────┘
         │
         ▼
    ┌──────────┐
    │  RETURN  │
    └──────────┘
```

# FIG. 11

START CONNECTION
OF SWITCH 85

S21

IS LINE DIFFERENTIAL
< EDGE_TH1?

NO

YES

S23

IS EDGE_TH1 ≦ LINE
DIFFERENTIAL
< EDGE_TH2?

NO

S22

CONNECT SWITCHES
85-1 THROUGH 85-4
TO TERMINAL A

YES

S24

CONNECT SWITCHES
85-1 THROUGH 85-4
TO TERMINAL B

S25

CONNECT SWITCHES
85-1 THROUGH 85-4
TO TERMINAL C

RETURN

# FIG. 12

START CONNECTION OF SWITCH 81

FIELD DIFFERENTIAL MODE? — NO → S33 — SCENE CHANGE PRESENT? — NO → S39

S31 — YES

SCENE CHANGE PRESENT? — YES

IS SCENE CHANGE BETWEEN FIELD n+1 AND FIELD n? — NO → S36 IS SCENE CHANGE BETWEEN FIELD n AND FIELD n-1? — NO

S34 — YES

**S32**
CONNECT SWITCH 81-1 TO TERMINAL A
CONNECT SWITCH 81-2 TO TERMINAL B
CONNECT SWITCH 81-3 TO TERMINAL B
CONNECT SWITCH 81-4 TO TERMINAL B

**S37**
CONNECT SWITCH 81-1 TO TERMINAL B
CONNECT SWITCH 81-2 TO TERMINAL B
CONNECT SWITCH 81-3 TO TERMINAL B
CONNECT SWITCH 81-4 TO TERMINAL B

**S39**
CONNECT SWITCH 81-1 TO TERMINAL A
CONNECT SWITCH 81-2 TO TERMINAL A
CONNECT SWITCH 81-3 TO TERMINAL A
CONNECT SWITCH 81-4 TO TERMINAL A

**S35**
CONNECT SWITCH 81-1 TO TERMINAL A
CONNECT SWITCH 81-2 TO TERMINAL C
CONNECT SWITCH 81-3 TO TERMINAL A
CONNECT SWITCH 81-4 TO TERMINAL A

**S38**
CONNECT SWITCH 81-1 TO TERMINAL A
CONNECT SWITCH 81-2 TO TERMINAL A
CONNECT SWITCH 81-3 TO TERMINAL C
CONNECT SWITCH 81-4 TO TERMINAL C

RETURN

EP 1 058 449 B1

# FIG. 13

# FIG. 14

# FIG. 15

# FIG. 16

CONVERSION TO
STILL REGION

STILL REGION

# FIG. 17

n-1  n → Field

X  Y W Z

FIG. 18A

STILL REGION

MOVING REGION

STILL REGION

AFTER ELIMINATING ISOLATED REGION

EXPANDED MOVING REGION

EXPANDED MOVING REGION

FIG. 18B

AFTER EXPANDING MOVING REGION

SOFT -SWITCHING REGION

SOFT -SWITCHING REGION

FIG. 18C

AFTER SOFT -SWITCHING

0  0  0  0.5  1  1  1  1  1  0.75 0.25  0
0  0.25 0.75  1  1  1  1  0.5  0  0

MOTION DETECTION COEFFICIENT

# FIG. 19

# FIG. 20A

103

101

102

# FIG. 20B

111

112

113

114

115

116

# FIG. 20C

122

123

121

131

NETWORK